# EUROPEAN PATENT APPLICATION

(11) **EP 4 550 434 A1**
(43) Date of publication of application: **07.05.2025**
(21) Application number: 24197773.5
(22) Date of filing: 30.08.2024
(51) Int. Cl.: H01M 4/04, H01M 4/133, H01M 4/134, H01M 4/136, H01M 4/38, H01M 4/58, H01M 4/587, H01M 10/0525, H01M 4/02

(54) **NEGATIVE ELECTRODE ACTIVE MATERIAL FOR SECONDARY BATTERY, METHOD OF PREPARING THE SAME AND LITHIUM SECONDARY BATTERY INCLUDING THE SAME**

(30) Priority: 31.10.2023 KR 20230147752
(71) Applicant: ECOPRO BM CO., LTD., Cheongju-si, Chungcheongbuk-do 28117 (KR)
(72) Inventor: JEON, Minyeong, 28116 Cheongju-si, Chungcheongbuk-do (KR); LEE, Dongwook, 28116 Cheongju-si, Chungcheongbuk-do (KR); LEE, Chong Min, 28116 Cheongju-si, Chungcheongbuk-do (KR); CHAE, Taesung, 28116 Cheongju-si, Chungcheongbuk-do (KR); SUH, Jun Won, 28116 Cheongju-si, Chungcheongbuk-do (KR)
(74) Representative: Beck & Rössig European Patent Attorneys

(57) **Abstract**

According to one exemplary embodiment of the present invention, there is a negative electrode active material for a secondary battery which includes a silicon-carbon composite including a carbon-based material and a first silicon-based nano-coating layer formed on the carbon-based material; silicon carbide; silicon nitride; and second silicon-based particles.

## Description

### BACKGROUND

### 1. Field of the Invention

The present invention relates to a negative electrode active material for a secondary battery, a method of preparing the same, and a lithium secondary battery including the same.

### 2. Discussion of Related Art

In recent years, as the demand for electronic devices such as mobile devices and the like has increased, the development of technology for mobile devices has expanded. Demand for lithium secondary batteries, such as lithium batteries, lithium ion batteries, lithium ion polymer batteries, and the like, as power sources for driving these electronic devices, has been significantly increased. Also, as the regulations related to automobile fuel economy and exhaust gas are being strengthened around the world, the growth of the electric vehicle market is accelerating. Therefore, it is expected that the demand for mid- to large-sized secondary batteries such as secondary batteries for electric vehicles (EVs), secondary batteries for energy storage systems (ESSs), and the like will rapidly increase.

Meanwhile, in recent years, as secondary batteries, such as mid- and large-sized secondary batteries, are increasingly required to have higher capacities, research has been conducted on silicon-based negative electrode materials having excellent theoretical capacity as negative electrode materials for secondary batteries. However, the silicon-based negative electrode materials may cause a significant volume change upon intercalation/deintercalation of lithium, thereby causing electrical detachment due to pulverization of silicon particles and loss of reversible capacity during repeated cycles.

In order to solve the problems of mechanical damage to electrodes caused by the volume expansion and contraction of silicon and the resulting rapid shortening of their lifespan, research has been conducted to pursue performance improvement using a method of compositing with a heterogeneous material that can buffer the volume expansion of silicon and a method of preparing silicon into nanoparticles. In particular, the technical aspect for a process of compositing graphite with silicon (nano) particles and the commercialization aspect of reducing the cost of a process of preparing silicon nanoparticles are being actively developed.

The present invention relates to a method of preparing a composite negative electrode material, in which a carbon-based material is composited with nano-sized silicon, in a single process, and provides a method of preparing a silicon-carbon composite by which silicon nanoparticles are formed on the surface of carbon using microwaves. Silicon has a melting point of 1,414°C and when melted, its density increases more than when it is in a solid state like water. Graphite (a carbon-based material) has the characteristic of rapid heat generation when the π electrons present in the structure are alternately induced in negative (-) and positive (+) directions using microwaves (wavelength: 1 m to 1 mm; frequency: 300 MHz to 300 GHz). By applying this phenomenon, silicon having a lower melting point than graphite may be melt-processed on the surface of graphite, and the entropy may rapidly increase by rapid energy transfer, which makes it possible to prepare a silicon nanomaterial having an increased specific surface area on the surface of graphite (graphite composited with nano-sized silicon).

The method of preparing a silicon-carbon composite using microwaves is a method of directly transferring energy to the surface of carbon. Regardless of the medium used to support the carbon material, when carbon is irradiated with microwaves, only the temperature of the carbon itself rises rapidly, and when microwave irradiation is stopped, it cools rapidly. Therefore, because the method is time- and energy-efficient compared to existing heating methods, it has the advantage of reducing the manufacturing time and energy costs.

However, because energy is transferred only to an area which is irradiated with microwaves, there is a problem that silicon nanoparticles are not uniformly formed on the entire surface of carbon (graphite) or the impregnated silicon particles become more coarse and thinner. In this case, it is difficult to sufficiently buffer the volume expansion of silicon particles upon intercalation/deintercalation of lithium.

Also, silicon carbide (SiC), which is synthesized at a high temperature of 900°C or higher, is generated as a by-product on the surface of carbon (graphite), which is rapidly heated to around 1,400°C by microwaves. Such silicon carbide is inert to lithium ions and prevents lithium ions from diffusing into silicon particles, leading to a decrease in capacity and efficiency.

### SUMMARY OF THE INVENTION

Therefore, it is an aspect of the present invention to provide a composite negative electrode material (a silicon-carbon composite) in which a carbon-based material is composited with nano-sized silicon through a sintering process using microwaves, and a method of preparing a silicon-carbon composite, in which a process of preparing silicon nanoparticles and a process of compositing a carbon-based material with silicon are performed in a single process.

It is another aspect of the present invention to provide a negative electrode active material having improved capacity characteristics by suppressing the production of silicon carbide (SiC) that is an inert material.

It is still another aspect of the present invention to reduce the proportion of unreacted silicon by controlling the production rate of silicon carbide and silicon nitride, which are reaction by-products, within a specific range.

It is yet another aspect of the present invention to provide a method of preparing a negative electrode active material capable of suppressing the production of reaction by-products and increasing the reaction rate of a silicon raw material by controlling the gas atmosphere, reaction time, and average particle diameter of the raw material in a microwave sintering process to specific ranges.

According to an aspect of the present invention, there is provided a negative electrode active material for a secondary battery, which includes a silicon-carbon composite including a carbon-based material and a first silicon-based nano-coating layer formed on the carbon-based material; silicon carbide; silicon nitride; and second silicon-based particles.

The silicon carbide (SiC) and the silicon nitride (SiNx) may be included in the silicon-based nano-coating layer, or may be mixed with the silicon-carbon composite.

The negative electrode active material may include 1 to 30% by weight of the silicon carbide based on the total amount of silicon element-containing compounds.

The negative electrode active material may include 10 to 40% by weight of the silicon nitride based on the total amount of silicon element-containing compounds.

The weight ratio (SiNx/SiC) of the silicon nitride (SiNx) to the silicon carbide (SiC) may range from 0.4 to 2.

The second silicon particles may be composed of silicon particles having an average particle diameter (D50) of 0.4 to 10 µm, and may be included in an amount of less than 40% by weight based on the total amount of silicon element-containing compounds.

The first silicon-based nano-coating layer may include at least one selected from a silicon thin film formed on a surface of the carbon-based material and having a thickness of 10 to 100 nm; and silicon particles having a particle size (D50) of 10 to 100 nm.

The carbon-based material may be at least one selected from the group consisting of natural graphite, artificial graphite, expanded graphite, graphene oxide, carbon nanotubes, carbon fibers, and hard carbon.

The negative electrode active material may include the carbon-based material and all silicon element-containing compounds in a weight ratio of 5:5 to 9.5:0.5.

According to another aspect of the present invention, there is provided a method of preparing a negative electrode active material for a secondary battery, which includes a mixing process of mixing a silicon-based material with a carbon-based material; and a sintering process of irradiating the mixture with microwaves in a gas atmosphere containing more than 50% by volume of N₂.

In the mixing process, the silicon-based material may be silicon particles having an average particle diameter (D50) of 0.4 to 10 µm.

In the mixing process, the carbon-based material may be carbon-based particles having an average particle diameter (D50) of 5 to 30 µm.

The sintering process may be performed in a gas atmosphere containing 80 to 100% by volume of N₂.

The sintering process may be performed by irradiating the mixture with microwaves at an output of 1 to 3 kW for 10 seconds to 10 minutes while maintaining a heat generation temperature of the mixture at 1,100 to 1,400°C.

The preparation method may further include a cooling process of cooling the sintered product to -10 to 10°C.

According to still another aspect of the present invention, there is provided a negative electrode for a secondary battery including the negative electrode active material, and a secondary battery including the negative electrode; a positive electrode; and an electrolyte.

### BRIEF DESCRIPTION OF THE DRAWINGS

FIGS. 1Ato 1C are SEM images of surfaces of negative electrode active materials prepared in Examples 1 to 3, respectively.
FIG. 2 shows the results of XRD analysis of the negative electrode active materials prepared in Examples 1 to 3.
FIGS. 3A and 3B show the results of SEM-EDS analysis of the negative electrode active materials prepared in Comparative Example 1 and Example 1.

### DETAILED DESCRIPTION OF EXEMPLARY EMBODIMENTS

Advantages and features of the present invention, and methods for achieving them will be apparent with reference to the embodiments described below in detail in conjunction with the accompanying drawings. However, it should be understood that the present invention is not limited to the embodiments disclosed below and may be implemented in various different forms. In this specification, the embodiments are merely provided to make the disclosure of the present invention complete and to fully inform the scope of the invention to those skilled in the art to which the present invention pertains. Thus, the present invention is only defined by the scope of the claims.

Unless otherwise defined, all terms (including technical and scientific terms) used in the present specification may be used with meanings which may be commonly understood by those skilled in the art to which the present invention pertains. When it is said that a part "includes" a certain element throughout the specification, this means that the part may further include other elements, rather than excluding the other elements, unless specifically stated to the contrary. Also, the singular forms are intended to include the plural forms as well, unless the context clearly specifies otherwise.

One exemplary embodiment of the present invention provides a negative electrode active material including a silicon carbon (Si/C) composite in which a silicon-based nano-coating layer is formed on a carbon-based material. The negative electrode active material is characterized by including a silicon-carbon composite including a carbon-based material and a first silicon-based nano-coating layer formed on the carbon-based material; silicon carbide; silicon nitride; and second silicon-based particles.

The first silicon-based nano-coating layer may improve the problems of mechanical damage to the electrode caused by volume expansion and contraction of silicon and the resulting rapid shortening of its lifespan by compositing with a carbon-based material capable of buffering the volume expansion of silicon.

Also, silicon carbide is a byproduct that does not contribute to the capacity and may reduce cell capacity, and silicon nitride may enhance cell stability by improving lithium ion conductivity during cell charging and discharging.

In the present invention, the second silicon-based particles refer to unreacted Si, that is, a material in which a silicon raw material remains in a raw material size of 400 nm to 10 µm without any nano-sizing even after a microwave sintering process. Such unreacted Si may cause a change in volume of the negative electrode because it does not sufficiently buffer the volume expansion upon intercalation/deintercalation of lithium.

The silicon carbide (SiC) and the silicon nitride (SiNx) may be included in the first silicon-based nano-coating layer, or may be mixed with the silicon-carbon composite.

When the SiC and SiNx are included in the first silicon-based nano-coating layer, they are mixed in the form of silicon nanoparticles and silicon thin films and in the form of particles to form a coating layer, or a coating layer may be formed on at least a portion of the silicon nanoparticles or silicon thin films.

The silicon carbide may be included in an amount of 1 to 30% by weight, specifically an amount of 1 to 25% by weight, 1 to 20% by weight, 5 to 20% by weight, or 5 to 15% by weight, based on the total amount of silicon element-containing compounds.

Silicon carbide (SiC), which is synthesized at a high temperature of 900°C or higher and is inert to lithium ions, may be deposited on the surface of the carbon-based material that is rapidly heated to around 1,200°C by microwaves. When the content of silicon carbide is greater than the above design range, Si, which is a reaction intermediate product of SiO, lowers the surface heat generation temperature of a graphite raw material during the microwave sintering reaction, and the reaction proceeds at a temperature lower than the melting point of the Si raw material. Accordingly, the Si reaction rate may decrease and SiC production may increase. Also, the produced SiC is a by-product that does not contribute to the capacity and has the problem of reducing cell capacity.

Meanwhile, the silicon element-containing compounds are the silicon element-containing compounds in the negative electrode active material prepared through the microwave sintering reaction, and include all of the silicon nano-coating layer, unreacted silicon, silicon carbide, and silicon nitride.

The silicon nitride may be included in an amount of 10 to 40% by weight, specifically an amount of 10 to 35% by weight, 10 to 30% by weight, or 12 to 30% by weight, based on the total amount of silicon element-containing compounds.

When the content of silicon nitride falls within the above design range, the capacity is partially reduced, but an irreversible phase (Li₂SiN₂) having high lithium ion conductivity may be formed during charging and discharging, thereby increasing life stability.

The weight ratio (SiNx/SiC) of the silicon nitride (SiNx) to the silicon carbide (SiC) may range from 0.4 to 2.5. Specifically, the weight ratio (SiNx/SiC) may be 0.4 to 2, 0.5 to 2, 0.5 to 1.5, or 0.5 to 1. When the weight ratio (SiNx/SiC) is greater than the above design range, the proportion of SiNx increases, and the total production amount of SiNx and SiC tends to rapidly increase, which may lead to deteriorated capacity characteristics. On the other hand, when SiNx/SiC is less than the above design range, the total production amount of SiNx and SiC may decrease, but unreacted Si (second silicon particles) may increase, thereby lowering the overall Si reaction rate (Si nano-sizing).

The second silicon particles may be composed of silicon particles having an average particle diameter (D50) of 0.4 to 10 µm.

The second silicon particles are particles in the form of particles in which the silicon raw material used in the mixing process is not nano-sized even after the microwave sintering process and remains at a raw material size of 0.4 to 10 µm, and may include unreacted Si. Since the second silicon particles are not included in the first silicon nano-coating layer, the second silicon particles are present in a simple mixed state with the silicon-carbon composite and may cause a change in volume of the negative electrode during cell operation.

The second silicon particles may be included in an amount of 40% by weight or less, for example, an amount of 5 to 40% by weight, 5 to 30% by weight, or 5 to 20% by weight, based on the total amount of silicon element-containing compounds.

When the content of the second silicon particles is greater than the upper limit, the proportion of unreacted Si may increase, which makes it difficult to buffer the volume expansion of silicon during cell operation, thereby causing a change in the volume of the negative electrode and a decrease in cell lifespan characteristics. On the other hand, when the content of the second silicon particles is less than the lower limit, the specific gravity of graphite may be too high, or by-products such as SiN, SiC, and the like may increase, which may result in deteriorated capacity characteristics.

Also, the second silicon particles may be unreacted silicon particles having an average particle diameter (D50) of 0.4 to 10 µm, for example, unreacted silicon particles having an average particle diameter (D50) of 0.4 to 5 µm, 0.4 to 3 µm, 0.4 to 2 µm, 0.4 to 1 µm, 0.4 to 0.9 µm, 0.4 to 0.8 µm, 0.4 to 0.7 µm, 0.4 to 0.6 µm, or 0.4 to 0.5 µm.

The average particle diameter (D50) of the second silicon particles, which include unreacted Si, falls within an average particle diameter (D50) range of the Si raw material. Therefore, the smaller the average particle diameter (D50) of the second silicon particles, although it is advantageous in increasing the Si reaction rate, the production of SiC and SiN may be promoted. On the other hand, the larger the average particle diameter, the lower the Si reaction rate.

The carbon-based material may be at least one selected from the group consisting of natural graphite, artificial graphite, expanded graphite, graphene oxide, carbon nanotubes, carbon fibers, and hard carbon. For example, natural graphite or artificial graphite may be preferable. Also, the carbon-based material may be single particles or secondary particles in which a plurality of particles are aggregated.

Also, the carbon-based material may include carbon-based particles having an average particle diameter (D50) of 5 to 30 µm, carbon-based particles having an average particle diameter (D50) of 5 to 20 µm or 10 to 20 µm, carbon-based particles having an average particle diameter (D10) of 3 to 20 µm, 3 to 15 µm, or 5 to 15 µm, and/or carbon-based particles having an average particle diameter (D90) of 15 to 35 µm, 15 to 30 µm, or 20 to 25 µm.

In addition, the carbon-based material may be spherical, plate-shaped, and needle-shaped particles. In this case, when the (porous, hollow, core-shell, multi-layer, and hierarchical) structure of the material is adjusted as in the plate-shaped and needle-shaped particles, the absorption capacity of a microwave absorber may be further improved by expanding the propagation path of microwaves.

Further, the conditions for controlling the heating of the carbon-based material through microwaves include the type, content, and particle shape of the carbon-based material. When the type, average particle diameter, and shape of the carbon-based material fall within the scope of the present invention, the microwave absorption capacity may be improved.

The first silicon-based nano-coating layer may include at least one selected from a silicon thin film formed on a surface of the carbon-based material and having a thickness of 10 to 100 nm and silicon particles having a particle size (D50) of 10 to 100 nm.

It is desirable to increase the proportion at which molten silicon is deposited in the form of nanoparticles on the surfaces of carbon-based particles and to prevent coarsening and interparticle connection (silicon thin film) of silicon particles. When the deposited silicon particles become coarse/thinner, it may be difficult to sufficiently buffer the volume expansion of silicon particles during intercalation/deintercalation of lithium. Therefore, it may be desirable for the first silicon-based nano-coating layer to include silicon particles having a particle size (D50) of 10 to 100 nm in a higher content (weight or volume) than a silicon thin film having a thickness of 10 to 100 nm.

The silicon (Si) particles may have an average particle diameter (D50) of 10 to 100 nm or 20 to 100 nm, and preferably have a spherical shape.

Meanwhile, the size (average particle diameter) of each of the silicon nanoparticles, the second silicon-based particles, the carbon-based material, and the like may refer to the size (D50) measured by cumulative volume. Unless otherwise defined herein, D50 refers to the average size, which means the diameter of pores having a cumulative volume of 50% by volume in the particle size distribution. The average size (D50) may be measured by a method well known to those skilled in the art. For example, the average size (D50) may be measured using a transmission electron micrograph or a scanning electron micrograph. As another method, the average size (D50) value may be obtained by measuring an average size using a measuring device using a dynamic light scattering method, performing data analysis to count the number of pores for each pore size range, and then calculating the average size (D50) value therefrom.

The first silicon-based nano-coating layer may be included in an amount of 1 to 50% by weight, for example, an amount of 1 to 40% by weight, 1 to 30% by weight, 5 to 30% by weight, or 5 to 20% by weight, based on the total weight of the silicon-carbon composite. Also, the first silicon-based nano-coating layer may be formed to a thickness of 10 to 200 nm, for example, a thickness of 10 to 180 nm, 10 to 160 nm, 10 to 150 nm, or 10 to 130 nm.

The silicon-carbon composite may further include a carbon coating layer located on the first silicon-based nano-coating layer. By minimizing direct exposure of silicon in the first silicon-based nano-coating layer to an electrolyte, electrolyte side reactions may be reduced, and the volume expansion of silicon particles may be further buffered, thereby improving the lifespan characteristics of batteries. The carbon coating layer may be formed to a thickness of 0.01 µm or more, for example, a thickness of 0.03 µm or more, 0.05 µm or more, and a thickness of 10 µm or less, 5 µm or less, or 1 µm or less. Accordingly, the above-described effects may be further improved.

Hereinafter, a method of preparing a negative electrode active material for a secondary battery is provided. The preparation method may be a method of preparing the negative electrode active material according to one exemplary embodiment of the present invention.

The method of preparing a negative electrode active material for a secondary battery includes a mixing process of mixing a silicon-based material with a carbon-based material; and a sintering process of irradiating the mixture with microwaves in a gas atmosphere containing more than 50% by volume of N₂.

The mixing process is a process of mixing a silicon-based material with a carbon-based material to obtain a mixture in which silicon-based particles are dispersed on a surface of the carbon-based material.

The mixing may be performed at 500 to 2,000 rpm or 700 to 1,500 rpm for 1 to 10 minutes using a particle mixer, and a rotary stirrer, an orbital stirrer, a blade mixer, or a particle fusion device may be used as the particle mixer, but the present invention is not limited thereto.

Also, the mixing may be performed by mixing the carbon-based material and silicon-based particles at a weight ratio of 99:1 to 60:40, a weight ratio of 99:1 to 70:30, a weight ratio of 95:5 to 70:30, or a weight ratio of 95:5 to 80:20.

The carbon-based material may be natural graphite, artificial graphite, expanded graphite, graphene oxide, carbon nanotubes, carbon fibers, hard carbon, or a combination thereof. The carbon-based material may be carbon-based particles having an average particle diameter (D50) of 5 to 30 µm or carbon-based particles having an average particle diameter (D50) of 5 to 20 µm or 10 to 20 µm.

The silicon-based material may be silicon particles having an average particle diameter (D50) of 0.4 to 10 µm, for example, silicon particles having an average particle diameter (D50) of 0.4 to 5 µm, 0.4 to 3 µm, 0.4 to 2 µm, 0.4 to 1 µm, 0.4 to 0.9 µm, 0.4 to 0.8 µm, 0.4 to 0.7 µm, 0.4 to 0.6 µm, or 0.4 to 0.5 µm. The lower the average particle diameter (D50) of the Si raw material, although it is advantageous in increasing the Si reaction rate, the production of SiC and SiN may be promoted. On the other hand, the larger the average particle diameter, the lower the Si reaction rate.

The microwave sintering process is a process of rapidly heating the surface of a carbon-based material in a mixture of a carbon-based (raw) material and a silicon-based (raw) material with microwaves, and melting the silicon-based material using the carbon-based material heated by the microwaves to form a first silicon-based nano-coating layer on the surface of the carbon-based material.

The microwave sintering process may be characterized by being performed in a gas atmosphere containing more than 50% by volume of N₂, for example, being performed in a gas atmosphere containing more than 90% by volume of N₂ or a gas atmosphere containing 100% by volume of N₂.

When the microwave sintering is performed in an N₂ gas atmosphere, oxidation of the silicon-based material and the carbon-based material may be prevented to quickly raise the surface heat generation temperature of the carbon-based material to the melting point level of silicon. Accordingly, the Si reaction rate may increase, and the production of SiNx may be promoted compared to SiC by-products, thereby improving a decrease in capacity and enhancing lithium ion electrical conductivity.

Also, N₂ gas is relatively easily decomposed upon microwave irradiation, making it easy to generate SiNx compounds. On the other hand, when an inert gas such as Ar and the like is used, both oxygen and nitrogen are not included in the gas, which results in a reduced production amount of both SiN and SiC. Also, the microwave-sintered reactants produce the silicon-based compound only in a pure Si state, which may be disadvantageous in terms of the lifespan characteristics and the particle and negative electrode stability according to the contraction and expansion of Si particles.

The microwave heating may be performed by microwave irradiation (wavelength: 1 m to 1 mm; frequency: 300 MHz to 300 GHz) at an output of 1 to 3 kW for 10 seconds to 10 minutes, 30 seconds to 2 minutes, or 30 seconds to 60 seconds.

As the microwave output and irradiation time increase, the Si reaction rate and the production amount of SiNx increase, which may be advantageous for improving lifespan characteristics, but the actual content of silicon active material may decrease, which may result in deteriorated capacity characteristics.

Also, the microwave heating may be performed by heating a surface of the carbon-based material to 1,200°C or higher within 1 minute, for example, by heating a surface of the carbon-based material to 1,200°C or higher within 40 seconds or within 10 seconds.

As a result, when the thawing (melting) temperature of the silicon-based raw material is reached, the interface temperature between the carbon-based material and Si reaches a temperature higher than the melting point of Si, thereby increasing the Si reaction rate. At this time, SiNx production may be promoted.

After the microwave sintering step, a cooling step may be further included to prevent the crystallinity of the silicon-based material deposited on the surface from increasing due to heat energy remaining in the carbon-based material. The cooling step may be carried out at room temperature or a temperature of -10 to 10°C under normal pressure conditions, and preferably carried out in a cooled reactor into which nitrogen gas is injected.

Another exemplary embodiment of the present invention provides a negative electrode for secondary batteries and a secondary battery, which includes the negative electrode active material.

The negative electrode includes a negative electrode current collector and a negative electrode active material layer located on the negative electrode current collector, and the negative electrode active material according to one aspect of the present invention is present in the negative electrode active material layer.

The negative electrode current collector is not particularly limited as long as it is conductive without causing a chemical change in the battery. For example, stainless steel, aluminum, nickel, titanium, calcined carbon, or aluminum or stainless steel surface-treated with carbon, nickel, titanium, silver, and the like may be used. Also, the negative electrode current collector may typically have a thickness of 3 to 500 µm, and fine irregularities may also be formed on the surface of the current collector to increase the adhesion of the negative electrode active material. Such a negative electrode current collector may be provided in various forms such as films, sheets, foils, nets, porous materials, foams, non-woven fabrics, and the like.

The negative electrode active material layer may be a layer including a conductive material and a binder along with the above-described negative electrode active material.

The conductive material is used to provide conductivity to the electrode, and may be used without particular limitation as long as it has conductivity without causing a chemical change in the negative electrode active material. Non-limiting examples of the conductive material include graphite such as natural graphite or artificial graphite; carbon-based materials such as carbon black, acetylene black, Ketjen black, channel black, furnace black, lamp black, thermal black, carbon fibers, and the like; metal powders or metal fibers such as copper, nickel, aluminum, silver, and the like; conductive whiskers such as zinc oxide, potassium titanate, and the like; conductive metal oxides such as titanium oxide and the like; or conductive polymers such as polyphenylene derivatives and the like. The conductive material may typically be included in an amount of 1 to 30% by weight based on the total weight of the negative electrode active material layer.

The binder is a material that serves to improve the adhesion between negative electrode active material particles and the adhesion between the negative electrode active material and the current collector. Non-limiting examples of the binder include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene butadiene rubber (SBR), a fluorinated rubber, or various copolymers thereof. The binder may typically be included in an amount of 1 to 30% by weight based on the total weight of the negative electrode active material layer.

The negative electrode according to one exemplary embodiment of the present invention may be manufactured according to a conventional method of preparing a negative electrode for a secondary battery, except that the above-described negative electrode active material is used. For example, a negative electrode may be manufactured by applying a slurry for forming a negative electrode active material layer, which includes a negative electrode active material and, optionally, a binder and a conductive material, on a negative electrode current collector, followed by drying and rolling. According to another example, a negative electrode may be prepared by casting a slurry for forming a negative electrode active material layer on a separate support, peeling the negative electrode active material layer from the support, and then laminating the film thus obtained on the negative electrode current collector.

According to still another aspect of the present invention, an electrochemical device including the above-described negative electrode is provided. Here, the electrochemical device may specifically be a battery, a capacitor, and the like. More specifically, the electrochemical device may be a lithium secondary battery.

The secondary battery includes a negative electrode, a positive electrode positioned to face the negative electrode, a separator interposed between the negative electrode and the positive electrode, and an electrolyte. Also, the lithium secondary battery may include a battery container (case) that accommodates an electrode assembly including a positive electrode, a negative electrode, and a separator, and a sealing member that seals the battery container.

In this case, depending on the shape of the battery container (case), lithium secondary batteries may be classified into can-type lithium secondary batteries in which the electrode assembly is built into a metal can, and pouch-type lithium secondary batteries in which the electrode assembly is built in a pouch made of a sheet such as an aluminum laminate.

Hereinafter, the present invention will be described in detail through examples. However, it should be understood that these examples are provided to describe the present invention in more detail, and are not intended to limit the scope of the present invention.

### EXAMPLES

### (Example 1)

Natural graphite and plate-shaped Si particle (D50:400nm) powder were charged into a super mixer at a weight ratio of 9:1, and mixed at 1,000 rpm for 10 minutes.

The resulting mixture was irradiated with microwaves (2,450 MHz, output: 1 kW, and irradiation time: 40 seconds) while maintaining the surface temperature of the mixture at 1,200°C in an N₂ (1 atm) atmosphere.

Subsequently, the mixture was cooled at a rate of -5°C/min to prepare a negative electrode active material including a silicon-carbon composite in which a silicon nano-coating layer was formed on natural graphite.

A negative electrode slurry was prepared by dispersing 96% by weight of the prepared silicon-carbon composite, 1% by weight of carbon black, 1.5% by weight of an SBR binder, and 1.5% by weight of carboxymethyl cellulose in 30 g of distilled water. The prepared negative electrode slurry was uniformly applied on a Cu thin film, and vacuum-dried at 135°C to produce a negative electrode for lithium secondary batteries.

A positive electrode slurry was prepared by mixing 94% by weight of LiNi_{0.9}Co_{0.1}Mn_{0.1}O₂ (NCM911, Ecopro BM), 3% by weight of carbon black, and 3% by weight of a PVdF binder in N-methyl-2-pyrrolidone. The prepared positive electrode slurry was uniformly applied on an Al thin film, vacuum-dried at 135°C, and then rolled to prepare a positive electrode for a lithium secondary battery.

The prepared positive and negative electrodes and a porous polyethylene separator (Celgard 2300, thickness: 25 µm) were introduced into a battery container, and a lithium secondary battery was manufactured using an electrolyte containing LiPF₆ at a concentration of 1.15 M in a solvent in which EC and EMC were mixed at a volume ratio of 3:7.

### (Examples 2 and 3)

As shown in Table 3 below, negative electrode active materials, negative electrodes, and lithium secondary batteries were prepared in the same manner as in Example 1, except that plate-shaped Si particles having a D50 of 2 µm (Example 2) and a D50 of 10 µm (Example 3) were used as the plate-shaped Si particle powder.

### (Example 4 and Comparative Example 1)

Negative electrode active materials, negative electrodes, and lithium secondary batteries were prepared in the same manner as in Example 1, except that microwave sintering was performed in a gas atmosphere as shown in Table 2 below.

### (Examples 5 to 8)

Negative electrode active materials, negative electrodes, and lithium secondary batteries were prepared in the same manner as in Example 1, except that microwave sintering was performed for a microwave (MW) time(s) shown in Table 4 below.

### EXPERIMENTAL EXAMPLES

### Experimental Example 1: Confirmation of particle shape and composition of negative electrode active material by SEM image and XRD analysis

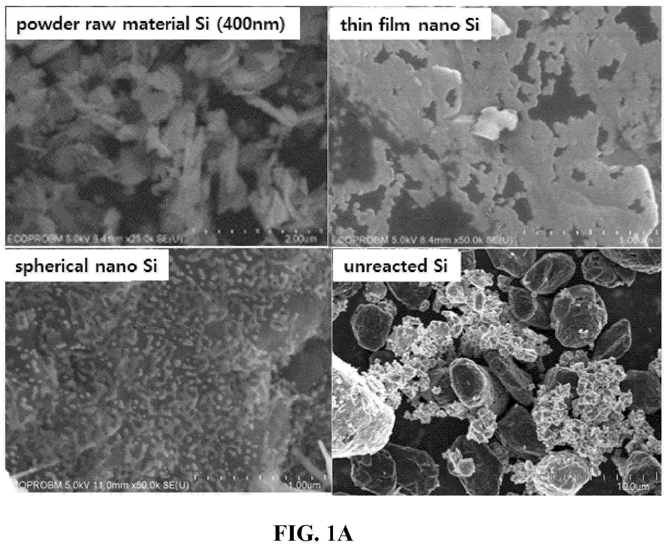

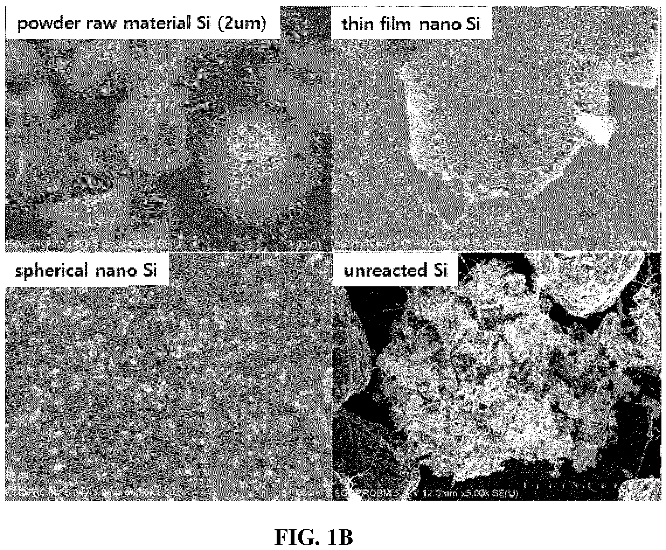

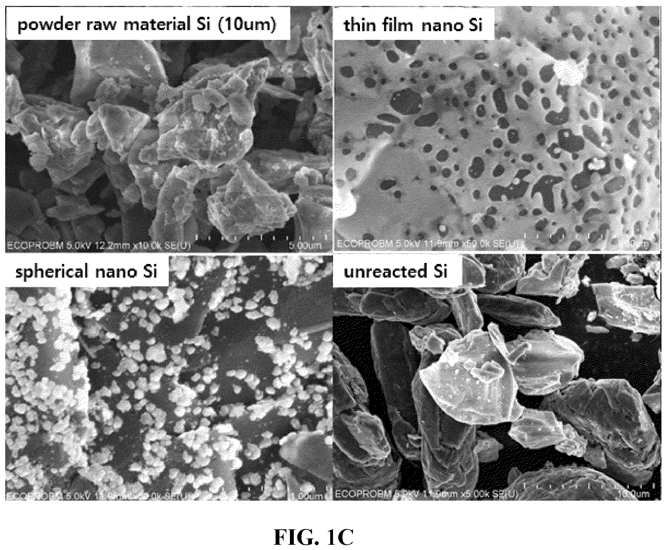

FIGS. 1A to 1C are SEM images of surfaces of the negative electrode active materials prepared in Examples 1 to 3.

Referring to FIGS. 1A to 1C, a silicon-carbon composite in which a silicon nano-coating layer in the mixed form of a thin film and particles was formed on the surface of natural graphite, and unreacted Si that was not deposited on the surface of graphite were confirmed.

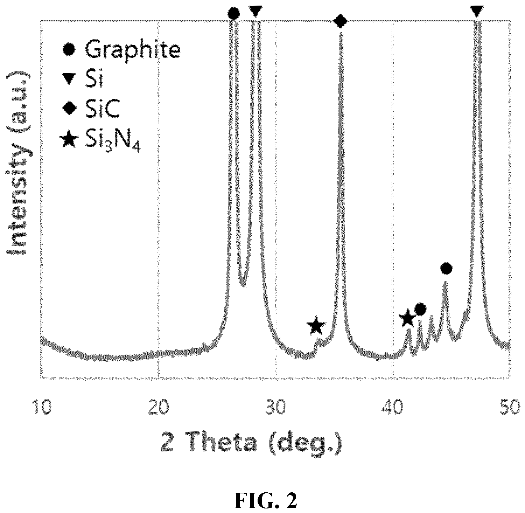

FIG. 2 shows the results of XRD analysis of the negative electrode active materials prepared in Example 1.

XRD analysis was performed using Bruker's D8 ADVANCE A25, and measurements were made by applying a current of 30 mA at a voltage of 45 kV.

From the analysis results in FIG. 2, peaks of all material compositions corresponding to Si, SiC, Si₃N₄, and graphite crystal phases were confirmed.

### Experimental Example 2: Analysis of surface heat generation temperature of raw material according to type of gas in sintering process atmosphere

Table 1 lists the heating temperature measured on the surface of the natural graphite raw material in the microwave sintering process of Example 1 and Comparative Example 1. At this time, the heat generation temperature is a temperature measured on the surface of a sample in real time at the point where the microwave irradiation time reaches 40 seconds.

**[Table 1]**

| | Comparative Example 1 | Example 1 |
|---|---|---|
| Atmospheric gas | Air 1 atm | N₂ 1 atm |
| Heat generation temperature | 950°C | 1,200°C |

When microwave carbothermal shock is performed in an air atmosphere containing oxygen in Comparative Example 1, it was analyzed that SiC was formed through the following reactions in the process of increasing the reaction rate (Nano Si conversion) of the Si raw material by adjusting the microwave treatment time/output, and the like.

SiO₂ (s) + C (s) → SiO (g) + CO (g)...... (1)

SiO (g) + 2C (s) → SiC (s) + CO (g) (2)

SiO (g) + 3CO (g) → SiC (s) + 2CO₂ (g)...... (3)

Referring to Reaction (1), silicon oxide and graphite react at a high temperature of approximately 900°C or higher to form SiO and CO gases. Referring to Reaction (2), SiO gas reacts with graphite to generate SiC nuclei. Referring to Reaction (3), the SiO and CO gases formed in Reactions (1) and (2) react to grow SiC crystals.

Since the silicon oxide formed in Comparative Example 1 has a low microwave absorption rate, the silicon oxide acts as a factor in increasing unreacted Si by lowering the surface heat generation temperature of natural graphite and the silicon raw material. Also, the silicon carbide produced from silicon oxide is a by-product that does not contribute to capacity and reduces cell capacity.

On the other hand, when the microwave carbothermal shock is performed in the N₂ atmosphere of Example 1, the formation of silicon oxide may be suppressed to increase the surface heat generation temperature of the raw material to the silicon melting point of around 1,200°C in a short time, thereby reducing unreacted Si. Also, the silicon nitride produced in an N₂ atmosphere forms an irreversible phase (Li₂SiN₂) having high lithium ion conductivity during cell charging and discharging, which has the effect of increasing lifespan stability.

### Experimental Example 3: Analysis of compositional SiN, SiC and Si contents and Si reaction rate of negative electrode active material particles

### (SiN, SiC, and Si content evaluation method)

The content of SiN is a value (% by weight) expressed by converting the mass ratio of N measured through ONH analysis into Si₃N₄, and the contents of SiC and Si are values (% by weight) expressed by converting the XRD peak area (XRD peak deconvolution) into a mass ratio. The results are summarized in Tables 2 to 4 below.

### (Si reaction rate evaluation method)

Unreacted Si refers to the form in which the silicon raw material used in the mixing process remains in a raw material size of 400 nm to 10 µm without any nano-sizing even after the microwave sintering process. Nano Si refers to silicon deposited on the surface of carbon in the form of a sphere or thin film having a size of 50 to 100 nm by reacting the silicon raw material used in the mixing process.

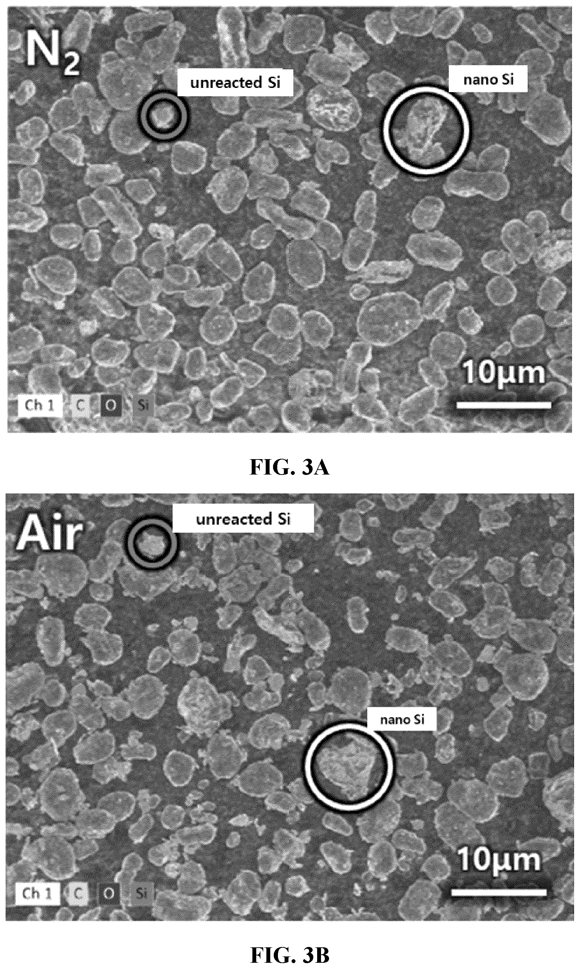

SEM-EDS analysis was performed on the negative electrode active materials prepared in Comparative Example 1 and Example 1. The results are shown in FIGS. 3A and 3B.

In Examples 1 to 8 and Comparative Example 1, the silicon particle size distribution before and after the microwave sintering process was analyzed, and the increase/decrease in area of the particle size peak corresponding to the size (D50 = 400 nm to 10 µm) of unreacted Si was calculated to calculate the Si reaction rate (%). The results are summarized in Tables 2 to 4 below.

**[Table 2]**

| | Reaction conditions | | | Negative electrode active material composition | | | Si reacti on rate |
|---|---|---|---|---|---|---|---|
| | Si raw material size | Gas atmosphere | MW time | Si₃N₄ | SiC | Si₃N₄/SiC ratio | |
| | (D50) (µm) | (atm) | (s) | (% by weight) | | | (%) |
| Example 1 | 0.4 | N₂ (1 atm) | 40 | 12 | 20 | 0.6 | 50 |
| Example 4 | 0.4 | Air/N₂ (0.5/0.5) | 40 | 2 | 27 | 0.1 | 29 |
| Comparative Example 1 | 0.4 | Air (1 atm) | 40 | 0 | 62 | 0.0 | 34 |

Referring to Table 2, the content of SiNx may be adjusted by adjusting the N₂ gas partial pressure, and when comparing Examples 1 and 4, it can be seen that the Si₃N₄ content proportion and the Si reaction rate increase as the nitrogen partial pressure in the atmospheric gas becomes higher.

**[Table 3]**

| | Reaction conditions | | | Negative electrode active material composition | | | Si reaction rate |
|---|---|---|---|---|---|---|---|
| | Si raw material size | Gas atmosphere | MW time | Si₃N₄ | SiC | Si₃N₄/ SiC ratio | |
| | (D50) (µm) | (atm) | (s) | (% by weight) | | | (%) |
| Example 1 | 0.4 | N₂ (1 atm) | 40 | 12 | 20 | 0.6 | 50 |
| Example 2 | 2 | N₂ (1 atm) | 40 | 6 | 13 | 0.5 | 37 |
| Example 3 | 10 | N₂ (1 atm) | 40 | 4 | 7 | 0.6 | 25 |

Referring to Table 3, it can be seen that the Si₃N₄/SiC ratio is maintained regardless of the size of the Si raw material, and that the Si reaction rate decreases as the size of the Si raw material increases.

**[Table 4]**

| | Reaction conditions | | | Negative electrode active material composition | | | Si reaction rate |
|---|---|---|---|---|---|---|---|
| | Si raw material size | Gas atmosphere | MW time | Si₃N₄ | SiC | Si₃N₄/ SiC ratio | |
| | (D50)( µm) | (atm) | (s) | (% by weight) | | | (%) |
| Example 1 | 0.4 | N₂ (1 atm) | 40 | 12 | 20 | 0.6 | 50 |
| Example 5 | 0.4 | N₂ (1 atm) | 20 | 10 | 20 | 0.5 | 48 |
| Example 6 | 0.4 | N₂ (1 atm) | 80 | 22 | 18 | 1.2 | 53 |
| Example 7 | 0.4 | N₂ (1 atm) | 120 | 29 | 15 | 1.9 | 55 |
| Example 8 | 0.4 | N₂ (1 atm) | 180 | 31 | 16 | 1.9 | 56 |

It can be seen that SiC production was suppressed as the microwave irradiation time increased, and the Si reaction rate also increased. These results show that when the production of silicon oxide is suppressed as described above, the surface heat generation temperature of natural graphite may increase to the silicon melting point of around 1,200°C within a short reaction time, thereby increasing the Si reaction rate and reducing the content of unreacted Si.

However, when the MW irradiation time increases excessively, the Si₃N₄/SiC ratio increases and the total amount of Si₃N and SiC increases, which may lead to a large decrease in capacity.

According to the present invention, a negative electrode active material including silicon nanoparticles and a thin film formed on a surface of the carbon-based material in the cooling process after the carbon-based material is heated in a short time upon microwave irradiation to melt silicon can be provided.

Also, according to the present invention, as the microwave carbothermal shock is performed in an N₂ atmosphere, the production of silicon oxide, which lowers the surface heat generation temperature of the raw material to around 900°C, can be suppressed to lower the surface heat generation temperature of the raw material to the silicon melting point of around 1,200°C in a short time, thereby reducing unreacted Si or increasing the reaction rate of the Si raw material. Also, the production of SiCx is relatively suppressed due to SiNx generated in an N₂ atmosphere, and SiNx has the effect of improving lithium ion electrical conductivity.

As described above, the present invention has been shown and described with reference to specific embodiments thereof. However, it should be understood by those skilled in the art that the present invention can be modified and changed in various ways without departing from the appended claims.

## Claims

1. A negative electrode active material for a secondary battery comprising:
a silicon-carbon composite including a carbon-based material and a first silicon-based nano-coating layer formed on the carbon-based material;
silicon carbide;
silicon nitride; and
second silicon-based particles.

2. The negative electrode active material of claim 1, wherein the silicon carbide (SiC) and the silicon nitride (SiNx) are included in the silicon-based nano-coating layer or mixed with the silicon-carbon composite.

3. The negative electrode active material of claim 1 or 2, wherein the silicon carbide is included in an amount of 1 to 30% by weight, based on the total amount of silicon element-containing compounds.

4. The negative electrode active material of one of claims 1 to 3, wherein the silicon nitride is included in an amount of 10 to 40% by weight, based on the total amount of silicon element-containing compounds.

5. The negative electrode active material of one of claims 1 to 4, wherein the weight ratio (SiNx/SiC) of the silicon nitride (SiNx) to the silicon carbide (SiC) ranges from 0.4 to 2.

6. The negative electrode active material of one of claims 1 to 5, wherein the second silicon particles are composed of silicon particles having an average particle diameter (D50) of 0.4 to 10 µm, and are included in an amount of less than 40% by weight based on the total amount of silicon element-containing compounds.

7. The negative electrode active material of one of claim 1 to 6, wherein the first silicon-based nano-coating layer includes at least one selected from a silicon thin film formed on a surface of the carbon-based material and having a thickness of 10 to 100 nm; and silicon particles having a particle size (D50) of 10 to 100 nm.

8. The negative electrode active material of one of claims 1 to 7, wherein the carbon-based material is at least one selected from the group consisting of natural graphite, artificial graphite, expanded graphite, graphene oxide, carbon nanotubes, carbon fibers, and hard carbon.

9. The negative electrode active material of one of claims 1 to 8, wherein the carbon-based material and all silicon element-containing compounds are included in a weight ratio of 5:5 to 9.5:0.5.

10. A method of preparing a negative electrode active material for a secondary battery, in particular a negative electrode active material according to any of claims 1 to 9, the method comprising:
a mixing process of mixing a silicon-based material with a carbon-based material; and
a sintering process of irradiating the mixture with microwaves in a gas atmosphere containing more than 50% by volume of N₂.

11. The method of claim 10, wherein
in the mixing process, the silicon-based material is a silicon particle having an average particle diameter (D50) of 0.4 to 10 µm; and/or
in the mixing process, the carbon-based material is a carbon-based particle having an average particle diameter (D50) of 5 to 30 µm; and/or
the sintering process is performed in a gas atmosphere containing 80 to 100% by volume of N₂.

12. The method of claim 10 or 11, wherein the sintering process is performed by irradiating the mixture with microwaves at an output of 1 to 3 kW for 10 seconds to 10 minutes while maintaining a heat generation temperature of the mixture at 1,100 to 1,400°C.

13. The method of one of claims 10 to 12, further comprising:
a cooling process of cooling the sintered product to -10 to 10°C.

14. A negative electrode for a secondary battery comprising the negative electrode active material of one of claims 1 to 13.

15. A secondary battery comprising the negative electrode of claim 14; a positive electrode; and an electrolyte.
